(19) Europäisches Patentamt
European Patent Office
Office européen des brevets

(11) Numéro de publication: **0 412 914 A1**

# (12) DEMANDE DE BREVET EUROPEEN

(21) Numéro de dépôt: **90420336.1**

(22) Date de dépôt: **12.07.90**

(51) Int. Cl.5: **C08G 77/62**, C08J 3/24, C04B 35/00, C04B 35/58, C08K 5/54

(30) Priorité: **10.08.89 FR 8910940**

(43) Date de publication de la demande: **13.02.91 Bulletin 91/07**

(84) Etats contractants désignés: **AT BE CH DE DK ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Barthelemy, Pascal**
**21 rue de la Part Dieu**
**F-69003 Lyon(FR)**
Inventeur: **Bobichon, Charles**
**1, rue d'Angile**
**F-69005 Lyon(FR)**
Inventeur: **Lebrun, Jean-Jacques**
**Centre Hospit. Lyon-Sud, Chemin du Grand Revoyet**
**F-69310 Pierre-Benite(FR)**

(74) Mandataire: **Dubruc, Philippe et al**
**RHONE-POULENC CHIMIE Service Brevets Chimie 25, quai Paul-Doumer**
**F-92408 Courbevoie Cédex(FR)**

## (54) Procédé de réticulation de polysilazanes notamment pour l'obtention de fibres céramiques.

(57) La présente invention concerne un procédé de réticulation de polysilazanes par mise en contact de ces polysilazanes avec une quantité efficace pour réaliser ladite réticulation, de trifluorométhanesulfonate de triorganosilyle, de préférence à une température comprise entre 60 °C et la température de ramollissement des polysilazanes.

Le procédé selon l'invention permet en particulier d'obtenir des fibres réticulées, bobinables, dévidables, non collantes et infusibles avant leur pyrolyse en vue d'obtenir des fibres céramiques à propriétés mécaniques améliorées.

EP 0 412 914 A1

# PROCEDE DE RETICULATION DE POLYSILAZANES NOTAMMENT POUR L'OBTENTION DE FIBRES CERAMIQUES

La présente invention a trait à un procédé de réticulation de polysilazanes.

Elle concerne également, à titre d'application, l'utilisation des polysilazanes ainsi réticulés pour la préparation de matériaux céramiques à base de carbure et/ou nitrure de silicium.

L'idée de préparer des produits céramiques, chargés ou non, à base de carbure et/ou nitrure de silicium par décomposition thermique de composés précurseurs du type polysilazane, notamment organopolysilazane ou organopoly(disilyl) silazane, est décrite dans de nombreux articles et brevets ont été publiés sur le sujet.

Les organopolysilazanes et les organopoly(disilyl)silazanes dénommés par la suite polysilazanes sont des produits bien connus se présentant sous forme de monomères, d'oligomères et de polymères cycliques ou linéaires et également sous la forme de polymères résineux. Ces polysilazanes peuvent être préparés suivant une large variété de procédés à partir d'une gamme étendue de produits de départ.

L'intérêt d'une telle voie polymère réside surtout dans les possibilités de mise en forme de ce type de produits, et plus particulièrement pour l'obtention, après pyrolyse, d'articles céramiques en $Si_3N_4$, SiC, SiNC, ou leurs mélanges, sous forme de fibres, films, pellicules ou revêtements plus ou moins minces.

En fait, la mise en oeuvre des polysilazanes sous la forme de fibres constitue probablement un de leurs avantages principaux.

Selon un schéma désormais classique, des polysilazanes (après ramollissement éventuel s'ils sont initialement à l'état solide) sont filés en fibres continues par tout moyen connu en soi, notamment par extrusion à travers des filières, ces fibres sont ensuite traitées dans le but notamment d'améliorer leur tenue thermique et/ou mécanique, puis pyrolysées pour donner finalement les fibres en céramique désirées.

Le traitement de la fibre préalablement à sa pyrolyse, appelé souvent indifféremment traitement de durcissement, d'infusibilité ou bien encore de réticulation, constitue une étape essentielle de tout procédé visant à la préparation de fibres céramiques par une voie polymères silazanes.

A ce jour, le durcissement des fibres polysilazanes fait appel soit à des méthodes physiques (irradiations) soit à des méthodes thermochimiques.

Parmi les procédés connus, plus spécifiquement appliqués à la réticulation de fibres on peut, en particulier citer :

US-A-3 853 567 enseignant :

- un traitement thermique sous atmosphère inerte et/ou humide entre la température ambiante et la température de ramollissement du polymère et
- une oxydation du polymère par des oxydants chimiques classiques : air, $O_2$, S, etc.....
- un traitement par un acide de Lewis comme $AlCl_3$.

EP-A-206 449 enseignant : la réticulation par de la vapeur d'eau suivie d'une pyrolyse à partir de 750 °C.

EP-A-245 047 enseignant : la réticulation par du chlorure de thionyle gazeux.

EP-A-259 944 enseignant : la réticulation de polysilazane porteur de groupe vinyle, d'un composé à fonction mercapto et d'un photoiniateur, au moyen d'un rayonnement U.V.

FR-A-2 611 208 enseignant : la réticulation de polysilazane soit par rayonnement U.V., de préférence en présence de photoiniateur ou d'un agent de vulcanisation, soit par un faisceau d'électrons. Le polysilazane utilisé résulte nécessairement de l'aminolyse par un disilazane de $\alpha,\omega$-bis(halogénodiorganosilyle)éthane sur un dihalogénodiorganosilane.

Les procédés de réticulation par oxydation chimique présentent l'inconvénient sérieux d'introduire des quantités importantes d'oxygène dans la fibre céramique, ce qui se traduit en général par une altération sensible des propriétés physicochimiques, en particulier sur ses propriétés mécaniques.

Les procédés de réticulation par rayonnement sont de mise en oeuvre délicate et onéreuse. Ils nécessitent généralement des polysilazanes particuliers d'un coût élevé.

En outre dans l'application fibre, comme illustré par exemple par EP-A-245 047 précité, dans les procédés industriels la fibre polymère après filage et réticulation est généralement bobinée avant de subir éventuellement d'autres traitement et, de toutes façons, de subir le traitement final de pyrolyse.

Il est clair que la fibre réticulée doit présenter des propriétés mécaniques suffisantes pour pouvoir être bobinée puis dévidée et, en particulier les fibres réticulées ne doivent pas présenter de caractère collant de façon à pouvoir être bobinées, dévidées et rebobinées sans difficultés.

Les procédés connus cités ci-dessus ne permettent pas d'obtenir une fibre de polysilazane réticulée présentant l'ensemble des propriétés ci-dessous :

- présenter les propriétés d'une fibre textile, c'est-à-dire être bobinables et dévidables sans être altérées pour pouvoir être ultérieurement manipulables et pyrolysables sans difficulté,
- présenter sur le plan de la fibre céramique une teneur en oxygène faible, généralement inférieure à 8 % en poids,
- présenter un rendement en céramique et des propriétés physicochimiques après céramisation convenables.

Le but de la présente invention est précisément de proposer un procédé de réticulation de polysilazane qui présente l'ensemble des propriétés ci-dessus.

Ce but, et d'autres, est atteint par la présente invention qui concerne en effet un procédé de réticulation d'un polysilazane, caractérisé par la mise en contact du polysilazane avec une quantité efficace d'au moins un trifluorométhanesulfonate de triorganosilyle.

La Demanderesse a pu constater que, de façon totalement inattendue et surprenante, un tel traitement, dont les modalités pratiques de mise en oeuvre seront définies plus en détails ci-après permet d'aboutir à des polysilazanes présentant une structure particulièrement réticulée à faible teneur en oxygène inférieure à 5 % avant céramisation, qui leur confère de bonnes propriétés d'infusibilité et d'insolubilité.

Par ailleurs les fibres traitées présentent un "caractère textile" ou une "qualité textile".

Selon l'invention on entend par les termes "caractère textile" ou "qualité textile" une fibre qui après le traitement pour la rendre infusible est d'une part bobinable et dévidable les fibres ne collant pas entre elles et sur la bobine et, d'autre part, les filaments constitutifs de la fibre ne collent pas entre eux et conservent leur identité.

Mais d'autres caractéristiques, aspects et avantages de l'invention apparaîtront encore plus clairement à la lecture de la description qui va suivre, et des exemples concrets, mais non limitatifs, relatifs à sa mise en oeuvre. Dans ce qui suit ou ce qui précède, sauf indications contraires, les pourcentages et parties sont en poids.

Les organopolysilazanes de départ susceptibles d'être réticulés selon un procédé conforme à l'invention, sont des produits bien connus en soi et aisés à préparer on peut utiliser notamment n'importe quel produit de réaction entre : (a) au moins un organohalogénosilane de formule (I):

$R_aX_{4-a}Si$ (I)

dans laquelle X désigne un halogène et les radicaux R, identiques ou différents, sont choisis parmi l'hydrogène, un radical alkyle linéaire ou ramifié éventuellement halogéné, un radical cycloalkyle, un radical aryle tel que le radical phényle et naphtyle, un radical arylalkyle ou alkylaryle, un radical alcényle tel que le radical vinyle ou allyle, un radical alcynyle tel le radical éthynyle ou propynyle, et l'indice a étant égal à 0, 1, 2 ou 3, et (b) un composé organique ou organosilylé comportant au moins un groupement $NH_2$ ou NH comme par exemple l'ammoniac, les amines primaires ou secondaires, les silylamines, les amides, les hydrazines, les hydrazides, etc...

Dans la formule (I), comme exemples de radicaux R alkyle, on peut citer les radicaux méthyle, éthyle, propyle, butyle, pentyle, hexyle, heptyle et octyle ; R cycloalkyle, on peut citer les radicaux cyclopentyle, cyclohexyle et cycloheptyle ; R arylalkyle : on peut citer les radicaux benzyle, phényléthyle ; R alkylaryle, on peut citer les radicaux tolyle et xylyle.

A titre d'exemple, comme organohalogénosilane utilisable seul ou en mélange, on peut citer :

$CH_3HSiCl_2$, $H_2SiCl_2$, $(CH_3)_2HSiCl$, $HSiCl_3$

$(CH_3)_2SiCl_2$, $(CH_3)_3SiCl$, $CH_3SiCl_3$, $SiCl_4$

$(CH_3)_2Si(CH_2Cl)_2$, $(CH_3)_3SiCH_2Cl$, $CH_3Si(CH_2Cl)_3$

$(C_6H_5)_2SiCl_2$, $(C_6H_5)(CH_3)SiCl_2$, $C_6H_5SiCl_3$

$(CH_3)(CH_3CH_2)SiCl_2$, $(CH_3)(CH_2=CH)SiCl_2$

$(CH_3)_2(CH_2=CH)SiCl$, $(C_6H_5)_2(CH_2=CH)SiCl$

$(C_6H_5)(CH_2=CH)SiCl_2$, $CH_3(C_6H_5)(CH_2=CH)SiCl$.

Comme exemple de composés comportant au moins un groupement $NH_2$ ou NH et utilisables pour la synthèse des organopolysilazanes ci-dessus, on peut citer : l'ammoniac, la méthylamine, la diméthylamine, l'éthylamine, la cyclopropylamine, l'hydrazine, la méthylhydrazine, l'éthylènediamine, la tétraméthylènediamine, l'hexaméthylènediamine, l'aniline, la méthylaniline, la diphénylamine, la toluidine, la guanidine, l'aminoguanidine, l'urée, l'hexaméthyldisilazane, le diphényltétraméthyldisilazane, le tétraphényldiméthyldisilazane, le tétraméthyldivinyldisilazane, le diméthyldiphényldivinyldisilazane et le tétraméthyldisilazane.

Les organopolysilazanes obtenus en fin de réaction englobent plus spécifiquement :

1. - les polymères linéaires répondant aux formules :

$H_2N(R_2SiNH)_pSiR_2NH_2$ (II)

et

$R_3SiNH(R_2SiNH)p, SiR_3$ (III)

dans lesquelles R a la signification donnée pour la formule (I) ; p et p′ sont des nombres entiers pouvant être compris entre 1 et 1000 généralement entre 3 et 300.

Les polymères de formule (II) peuvent être préparés par mise en contact de diorganodichlorosilanes avec de l'ammoniac, et ceux de formule (III) par réaction d'ammoniac sur un triorganochlorosilane ou un mélange de diorganodichlorosilane et de triorganochlorosilane (voir brevet français FR-A-1 086 932, brevet américain US-A-2 564 674).

De façon générale, la réaction d'organohalogénosilane sur une organoamine est décrite dans les brevets américains US-A-3 853 567 et US-A-3 892 583 et la réaction d'organohalogénosilane sur un disilazane est décrite dans le brevet belge BE-A-888 787.

2. - les polymères cycliques répondant à la formule :

$(R_2SiNH)_n$ (IV)

dans laquelle n est compris entre 3 et 10, généralement n = 3,4 et R a la signification donnée pour la formule (I) ci-dessus. Ils sont décrits notamment dans le brevet britannique GB-A-881178.

3. - les polymères résineux formés de motifs choisis parmi ceux de formule $R_3SiNH_{0,5}$, $R_2SiNH$, $RSiNH_{1,5}$, $Si(NH)_2$.

Ils sont avantageusement préparés par mise en contact des organochlorosilanes correspondant ou des mélanges de ces silanes, avec de l'ammoniac, de préférence en milieu solvant organique (voir brevets français FR-A-1 379 243, FR-A-1 392 853 et FR-A-1 393 728).

Les organopoly(disilyl)silazanes de départ susceptibles d'être réticulés selon un procédé conforme à l'invention, sont également des produits bien connus en soi et aisés à préparer. Ils peuvent être notamment préparés par action : (a) d'un composé organique ou organosilylé comportant au moins un groupement $NH_2$ ou NH comme par exemple l'ammoniac, les amines primaires ou secondaires, les silylamines, les amides, les hydrazines et les hydrazides, etc..., sur (b) au moins un organohalogénodisilane de formule :

$R_bX_{3-b}Si\ Si\ R_cX_{3-c}$ (V)

dans laquelle les radicaux R identiques ou différents ont la même signification que ci-dessus et b est égal à 0,1, 2 ou 3 et c est égal à 0, 1 ou 2, et X est un halogène, généralement le chlore.

Comme exemple de composés de formule (V) on peut citer :

$(CH_3)_2\ ClSiSi\ (CH_3)_2\ Cl$, $(CH_3)_2Cl\ SiSi\ CH_3\ Cl_2$

$CH_3\ Cl_2\ SiSi\ CH_3\ Cl_2$

Comme exemples de composés comportant au moins un groupement $NH_2$ et NH utilisables pour la synthèse des poly(disilyl)silazanes, on peut citer les mêmes composés que ceux cités ci-dessus pour l'aminolyse des organohalogénomonosilanes.

De manière générale, la réaction d'halogénodisilane, en présence éventuellement d'halogenosilane, sur l'ammoniac est décrite dans le brevet européen EP-A-75 826. La réaction d'halogénodisilane sur un disilazane est décrite dans le brevet français FR-A-2 497 812.

Enfin, comme décrit dans le brevet EP-A-75 826, il est possible de préparer des organopoly (disilyl) silazanes-silazanes par réaction de dérivés aminés cités précédemment sur des mélanges de produits halogénés de formule (I) et (V) ci-dessus.

Les polysilazanes de départ préparés à partir d'ammoniac sont généralement appelés ammonolysats et les polysilazanes de départ préparés à partir d'un composé aminé comme indiqué ci-dessus sont appelés aminolysats qui incluent donc les ammonolysats.

Bien entendu, il est également possible d'utiliser à titre de polysilazanes de départ des polysilazanes qui, issus des réactions d'aminolyse décrites ci-dessus, ont subi en outre des traitements catalytiques bien connus destinés à provoquer, suivant la nature de l'aminolysat, une polymérisation et/ou une copolymérisation et/ou un réarrangement des molécules, et ceci dans le but d'augmenter encore leur poids moléculaire, mais tout en gardant aux polysilazanes obtenus leur caractère fusible et soluble dans les solvants organiques.

Les conditions de mise en oeuvre de tels traitements catalytiques sont décrites notamment dans les documents suivants, tous cités à titre de références non limitatives : JP-A-79/93 100, US-A-3 007 886, US-A-3-187 030 et FR-A-2 577 933.

Il est également possible d'utiliser à titre de polysilazanes de départ des copolymères silanes-silazanes obtenus par polycondensation, en milieu solvant et en présence d'un métal alcalin, notamment le sodium, entre des silanes chlorés et des disilazanes chlorés, comme décrit dans EP-A-296 028, ou bien encore des polycarbosilazanes obtenus par thermolyse, de préférence opérée sous atmosphère inerte et à une température comprise entre 250 °C et 550 °C, des copolymères ci-dessus.

De préférence, on opérera sur des polysilazanes de départ présentant par molécule au moins un groupement

$\equiv$ Si-NH-.

Le trifluorométhanesulfonate de triorganosilyle, dénommé également ci-dessous agent de réticulation répond de préférence à la formule :

$$CF_3 - \overset{\overset{O}{\|}}{\underset{\underset{O}{\|}}{S}} - O - SiR_3 \qquad (A)$$

dans laquelle les radicaux R, identiques ou différents, représentent un radical hydrocarboné monovalent. Les produits de formule (A) peuvent être obtenus par réaction de l'acide trifluorométhanesulfonique sur l'halogénotriorganosilane correspondant.

Comme exemples de radicaux R utilisables on peut citer les radicaux alkyle linéaires ou ramifiés ayant de 1 à 12 atomes de carbone, le radical trifluoro-3,3,3-propyle, le radical phényle et le radical vinyle.

On recommande plus particulièrement d'utiliser le trifluorométhanesulfonate de triméthylsilyle.

La mise en contact entre le polysilazane de départ et l'agent de réticulation peut se faire selon tout moyen connu en soi.

L'agent de réticulation peut se présenter sous la forme d'un liquide ou d'un gaz.

Par ailleurs, par quantité efficace d'agent de réticulation tel que notamment défini ci-dessus, on entend une quantité suffisante pour réticuler convenablement le polysilazane et lui assurer ainsi un caractère substantiellement infusible et insoluble dans la plupart des solvants organiques usuels (pentane, hexane, toluène, benzène...). On recommande d'utiliser de 0,1 à 15 %, de préférence de 0,5 à 5 % en poids d'agent de réticulation de formule (A), calculés par rapport au poids de polymère à traiter.

La température à laquelle est mise en oeuvre le traitement, et la durée de ce dernier, peuvent varier dans une large mesure et dépendent de la nature du polysilazane à durcir, ainsi que de la quantité d'agent de réticulation mise en jeu. D'une manière générale, la durée est liée à la température du traitement : plus cette température est élevée et plus la durée du traitement peut être raccourcie, l'important étant d'aboutir dans tous les cas en fin de traitement à un état substantiellement infusible et insoluble. Durant le traitement on peut opérer à température constante ou en faisant varier cette température.

D'une manière pratique, cette température est généralement comprise entre l'ambiante et la température de ramollissement du polysilazane à durcir elle est de préférence comprise entre 50 °C et une température légèrement inférieure à celle correspondant au point de ramollissement du polysilazane à durcir.

La durée du traitement n'étant pas critique, elle peut varier de quelques minutes à plusieurs heures, selon les températures mises en jeu.

Selon une première variante, préférée, de mise en oeuvre du procédé de réticulation selon l'invention, et convenant plus particulièrement pour la préparation ultérieure de fibres ou de couches minces réticulées, le polysilazane de départ est tout d'abord mis à la forme désirée (c'est-à-dire sous la forme d'un article que l'on souhaite obtenir après céramisation) puis mis en contact avec l'agent de réticulation destiné à l'imprégner : l'agent de réticulation peut alors se présenter sous la forme d'un liquide ou d'un gaz, mais de préférence sous la forme d'un gaz.

Dans ce dernier cas, l'agent de réticulation peut être utilisé pur, ou bien encore dilué dans un gaz inerte, tel qu'un gaz d'argon (ou tout autre gaz rare) ou d'azote par exemple.

Dans ce cas toujours, on opère généralement à pression atmosphérique, bien que des pressions inférieures ou supérieures ne soient bien évidemment pas exclues ; en outre la mise en contact entre le polysilazane et l'agent de réticulation peut être statique ou dynamique, c'est à dire réalisée sous balayage en utilisant par exemple le dispositif décrit par EP-A-245 047.

Selon une seconde variante de mise en oeuvre du procédé de réticulation selon l'invention, l'adjonction de l'agent de réticulation au polysilazane de départ peut se faire par mélange direct, en masse ou en milieu solvant organique, des deux composés.

Cette seconde variante n'offre un intérêt réel que dans la mesure où, bien entendu, l'agent de réticulation utilisé est, à température ambiante, substantiellement inactif vis à vis du polysilazane de départ, c'est à dire que sa mise en contact avec le polysilazane n'engendre chez ce dernier que peu ou pas de

transformations physico-chimiques notables, notamment au niveau de son point de fusion ou de ramollissement. Le caractère substantiellement stable, à température ambiante, de la composition ainsi obtenue permet alors de ne pas perturber la mise en forme ultérieure du polysilazane, notamment lors d'une extrusion ; plus précisement, les compositions ainsi obtenues peuvent ensuite être mises en forme selon les configurations les plus diverses telles que filaments, fibres, pellicules, revêtements de support, articles moulés ou autres, puis réticulées, la réticulation étant alors initiée par chauffage, notamment à la sortie d'une filière d'extrusion. Comme déjà indiqué, de telles compositions se prêtent alors avantageusement à la mise sous forme de fibres, bobinables ou dévidables, pour l'obtention, après réticulation et pyrolyse, de fibres céramiques. Elles peuvent en outre servir de matrice pour des fibres céramiques réalisées notamment en SiC, $SiO_2$, $Si_3N_4$, $B_4C$, etc... Plus simplement encore, elles peuvent aussi être utilisées à la préparation de poudres céramiques.

Il va bien entendu de soi que les polysilazanes de départ destinés à être réticulés peuvent par ailleurs contenir des charges, de préférence choisies parmi $SiO_2$, $Si_3N_4$, SiC, BN, $B_2O_3$, $B_4C$, AlN, $Al_2O_3$, $Al_4C_3$, TiN, $TiO_2$, $ZrO_2$, ZrC, $VO_2$, etc...En outre, si besoin est pour une application donnée, leur viscosité peut être ajustée classiquement par ajout d'un solvant organique compatible avec le polysilazane considéré, comme par exemple du benzène, du toluène, de l'hexane, du cyclohexane, de l'éther isopropylique, de l'éther éthylique, du dichlorométhane ou du chlorobenzène.

A l'issue du traitement de réticulation selon l'invention, on récupère un polysilazane, éventuellement mis en forme, infusible et insoluble dans la plupart des solvants organiques usuels, notamment dans l'hexane.

Les polysilazanes ainsi durcis peuvent alors subir, de manière classique et connue, des traitements thermiques de pyrolyse destinés à les transformer en des céramiques à base de SiC, $Si_3N_4$ ou leurs mélanges.

Plus particulièrement, les supports recouverts ou imprégnés du polysilazane durci, ou les fibres en polysilazane durci, peuvent subir immédiatement ou ultérieurement une pyrolyse menée sous vide ou sous pression ou sous atmosphère inerte ou réactive (par exemple $NH_3$) jusqu'à obtenir une céramisation totale.

La température de pyrolyse est généralement comprise entre 800 et 1 600 °C, de préférence entre 950 et 1 400 °C.

Cette céramisation est effectuée selon les procédés bien connus de l'homme de métier, décrits notamment dans les brevets cités ci-dessus.

Selon une variante préférée de l'invention on recommande d'effectuer avant ou après l'étape (a) de traitement par le trifluorométhanesulfonate de triorganosilyle, une étape (b) supplémentaire de traitement consistant à mettre en contact lesdits polysilazanes avec une quantité efficace d'au moins un composé choisi parmi (i) les composés de formule

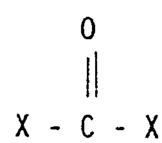 et

(ii) les composés comprenant au moins deux groupements fonctionnels de formule

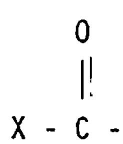,

formules dans lesquelles X représente un halogène.

Ce traitement de réticulation fait l'objet de la demande de brevet français FR-A-2 640 982 déposée le 23 décembre 1988 au nom de la Demanderesse. Selon l'invention il est recommandé d'effectuer ce traitement supplémentaire avant le traitement par le trifluorométhanesulfonate de triorganosilyle.

Les composés de formule

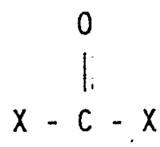

et ceux comprenant au moins deux groupements fonctionnels de formule

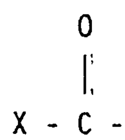

qui peuvent être utilisés pour la réticulation de polysilazanes tels que notamment définis ci-dessus, sont également des produits bien connus dans l'état de l'art puisque rentrant dans la classe générale respectivement des oxyhalogénures de carbone et des polyhalogénures d'acides. Tous ces composés (oxyhalogénures et polyhalogénures) seront dénommés dans la suite, par commodité, agent de réticulation.

L'oxyhalogénure de carbone préféré est l'oxychlorure de carbone, connu aussi sous le nom de phosgène.

Les polyhalogénures d'acides préférés sont les polychlorures d'acides. Ces derniers produits sont classiquement obtenus en faisant réagir par exemple le pentachlorure ou le trichlorure de phosphore sur les acides polycarboxyliques correspondants.

Plus l'agent de réticulation comprendra de groupements fonctionnels du type chlorure d'acide, et plus la composition polysilazane obtenue en fin de réaction sera réticulée, étant par ailleurs entendu, comme déjà indiqué, que ledit composé réticulant doit contenir à l'origine au moins deux groupements fonctionnels du type chlorure d'acide.

Parmi les polychlorures d'acides susceptibles d'être utilisés dans un procédé de réticulation conforme à l'invention, on peut citer, à titre purement d'exemples, les polychlorures :

- d'acides aliphatiques dicarboxyliques, tels que :
. l'acide oxalique
. l'acide malonique
. l'acide succinique
. l'acide glutarique
. l'acide adipique
. l'acide diméthyl-2,4 adipique
. l'acide pimélique
. l'acide subérique
. l'acide azélaïque
. l'acide sébacique
. l'acide dodécanedioïque
. l'acide fumarique
. l'acide maléique
. l'acide méthyliminodiacétique
. l'acide diméthylamino-3 hexanedioïque
- d'acides cycloalcanes dicarboxyliques, tels que :
. l'acide cyclohexane dicarboxylique-1,4
. l'acide diméthylamino-3 cyclopentane dicarboxylique-1,2
- de diacides aromatiques, tels que :
. l'acide phtalique
. l'acide isophtalique
. l'acide téréphtalique
. l'acide phénylènediacétique
. l'acide naphtalènedicarboxylique-1,5
. l'acide naphtalènedicarboxylique-1,6
. l'acide diphényldicarboxylique-4,4′
. l'acide diphényldicarboxylique-3,3′
. l'oxyde de bis(hydroxycarbonyl-4)phényle

. l'oxyde de bis(hydroxycarbonyl-3)phényle
. la dihydroxycarbonyl-4,4′ diphénylsulfone
. la dihydroxycarbonyl-3,3′diphénylsulfone
- d'acides pyrimidines ou imidazoles dicarboxyliques.
- d'acides hydroxypolycarboxyliques, et plus particulièrement les acides hydroxydi- ou hydroxytricarboxyliques, comme par exemple l'acide malique, l'acide citrique et l'acide tartronique.
- d'acides poly(hydroxycarboxyliques), comme par exemple l'acide tartrique.
- d'aminoacides dicarboxyliques et leurs amides correspondantes, comme par exemple l'acide aspartique, l'asparagine, l'acide glutamique et la glutamine.

Les dichlorures d'acides aliphatiques dicarboxyliques, et notamment ceux dont la longueur de la chaîne principale hydrocarbonée n'excède pas 18 atomes de carbone, et de préférence 8 atomes de carbone, conviennent particulièrement bien comme agents de réticulation. Selon l'invention on recommande plus particulièrement d'utiliser le dichorure de l'acide oxalique de formule

$$Cl - \overset{O}{\overset{\|}{C}} - \overset{O}{\overset{\|}{C}} - Cl.$$

Les quantités utilisables d'agents de réticulation et les conditions de mise en oeuvre de l'étape (b) sont tout à fait similaires à celles de l'étape (a) décrites ci-dessus pour le trifluorométhane sulfonate de triorganosilyle et ce qui a été décrit ci-dessus pour ce dernier agent de réticulation est également applicable pour les agents de réticulation optionnels (i) et (ii).

Ce traitement supplémentaire de l'étape (b) effectué de préférence, en premier lieu est particulièrement recommandé dans le cas où l'on prépare une fibre. Il permet d'assurer l'obtention d'une fibre ayant d'excellentes propriétés textiles, une faible teneur en oxygène, généralement inférieure à 8 % en poids après céramisation et conduit à une fibre céramique présentant de très bonnes propriétés mécaniques.

Après l'étape (a) de traitement par le produit de formule (A) suivie ou précédée éventuellement de l'étape (b) de traitement par un composé de formules (i) et (ii), on recommande de faire subir éventuellement à la fibre une étape (c) consistant en un traitement thermique à 300-400 °C, de préférence en portant lentement la fibre de la température ambiante à une température maximum de 300-400 °C, puis retour à la température ambiante (25 °C).

Cette montée en température peut être effectuée avantageusement pendant une durée comprise entre 5 et 50 heures.

Ce traitement thermique permet d'améliorer encore les propriétés mécaniques de la fibre réticulée sans augmenter sa teneur en oxygène et permet donc d'effectuer sa céramisation en limitant les risques de cassures.

La pyrolyse s'effectue, sous vide ou sous atmosphère inerte contenant éventuellement de l'ammoniac, à des températures comprises entre 750 °C et 1600 °C en un ou plusieurs paliers successifs, de préférence la température des derniers paliers de la pyrolyse est comprise entre 1000 °C et 1600 °C afin de structurer la céramique obtenue et donc d'améliorer les propriétés mécaniques.

Après pyrolyse, dans le cas où la céramique se présente sous forme d'une fibre, il est également avantageux pour améliorer les propriétés mécaniques de la fibre, de mettre en contact cette fibre avec de l'acide fluorhydrique conformément à l'enseignement de la demande de brevet français FR-A-2 631 334 déposée le 10 mai 1988 au nom de la Demanderesse.

Ce traitement supplémentaire de la fibre céramisée permet d'atteindre simultanément les résultats suivants :
- tout d'abord l'élimination des impuretés de surface, et notamment des couches d'oxydes superficielles, comme par exemple de silice,
- ensuite l'élimination substantielle des défauts de surface critiques présents initialement sur la fibre,
- et enfin l'amélioration sensible de la contrainte à la rupture de la fibre.

L'acide fluorhydrique est de préférence utilisé sous la forme d'une solution liquide, mais l'utilisation d'acide fluorhydrique gazeux n'est bien entendu pas exclue.

D'autre part, cette solution liquide est de préférence aqueuse.

Le taux de dilution de l'acide HF dans ladite solution est alors avantageusement compris entre 5 et 30 % en volume, et se situe de préférence aux environs de 10 % en volume.

La durée du traitement peut varier dans une large mesure, c'est-à-dire dans un intervalle de temps s'étalant entre quelques minutes et plusieurs heures et plus particulièrement entre 5 minutes et 5 heures ; néanmoins, les durées de traitement comprises entre 5 et 60 minutes sont généralement suffisantes pour arriver au résultat recherché.

Concernant enfin la température à laquelle est menée le traitement, elle peut être comprise entre l'ambiante et 100 °C, mais se situe de préférence aux environs de 20-30 °C, et encore plus préférentiellement vers 25 °C.

D'une manière générale, le règlage des trois paramètres interdépendants que sont la concentration, le temps et la température, est déterminé en tenant compte du fait qu'un traitement trop long (HF trop concentré et/ou température trop élevée) ou trop long, peut endommager la fibre en modifiant ses propriétés à coeur (diminution de la densité, apparition d'une corrosion par piqûres, modification de la morphologie ou autres).

Pratiquement, on arrête le traitement selon l'invention dès lors que l'apparition d'une surface parfaitement lisse et propre est observée.

Les fibres céramiques selon l'invention, traitées ou non par HF, présentent une teneur en oxygène inférieure à 8 % et même à 6 %. Cette faible teneur en oxygène augmente leur stabilité thermochimique à des températures d'utilisation de 1 000-1 500 °C. Cette thermostabilité n'est pas atteinte par les procédés de réticulation de l'art antérieur.

Les fibres traitées selon l'invention peuvent trouver une application importante comme agents de renforcement de composites à matrice verre, métal ou céramique, compte-tenu du fait que, d'une manière générale, il est bien connu que dans de tels matériaux les caractéristiques de l'interface fibres-matrice ont une grande importance.

Dans ce qui suit ou ce qui précède, les % et parties sont en poids, sauf mentions contraires.

Les exemples suivants illustrent l'invention sans en limiter la portée.

Dans ces exemples on a mesuré le module élastique E en gigapascal (GPa) selon une méthode analogue à la norme ASTM.D3379-75 sur filaments unitaires.

La contrainte à la rupture $\sigma_r$ dénommée également résistance à la traction est mesurée en mégapascal (MPa) selon une méthode analogue à la norme ASTM.D3379-75 sur un filament unique de 10 mm de longueur.

La valeur de $\sigma_r$ indiquée est celle obtenue en faisant la moyenne arithmétique sur 30 éprouvettes prelevées de façon aléatoire.

Pour la mesure de E et $\sigma_r$ on a utilisé un appareil de traction ERICHSEN®, muni d'un capteur référence 717DS-5 NEWTONS. Cet appareil est assisté par ordinateur et présente une vitesse de traction de 1 mm/minute.

- <u>EXEMPLE 1</u> :

Un polysilazane de départ est tout d'abord préparé de la manière suivante :
dans un réacteur de trois litres double enveloppe muni d'une agitation mécanique, d'un tube d'entrée des gaz et d'un condenseur, on effectue une coammonolyse, en présence de 1,1 litre d'éther isopropylique, d'un mélange de $CH_3SiCl_3$ (0,85 mole) et de $(CH_3)_2SiCl_2$ (0,59 mole). Ce mélange dans l'éther isopropylique est refroidi à 3 °C et est maintenu à cette température pendant l'introduction de $NH_3$ gazeux. Le débit d'introduction de $NH_3$ est d'environ 6 ml/s et l'addition a lieu en 6 heures. En fin d'essai, on filtre le chlorure d'ammonium formé sur verre fritté (diamètre moyen des pores : 10 µm) et on récupère une solution limpide de polysilazane. Cette solution est ensuite concentrée puis traitée avec de l'acide triflique selon des modalités pratiques définies dans la demande de brevet français FR-A-2 577 933.

Cette solution est ensuite évaporée (élimination du solvant). On récupère ainsi un polysilazane dont la température de ramollissement est de 130 °C (mesurée au banc KOFFLER).

Ce polysilazane est ensuite filé par extrusion sous forme de fibres à 250 filaments de 21 µm de diamètre, puis la fibre est bobinée.

Dans une étuve munie d'un programmateur de températures, balayée par de l'azote sec, on charge sous atmosphère inerte une bobine de 26,5 g du fil polysilazane ainsi préparé. Après deux purges successives (vide puis azote) on introduit à 25 °C 0,312 g (1,2 % du poids du fil) de chlorure d'oxalyle véhiculé par le courant d'azote sec, tout en commençant le cycle thermique suivant :
1 : 25 °C à 120 °C : 5 °C/h
2 : 120 °C à 300 °C : 3 °C/h
3 : palier à 300 °C : 4 heures

4 : retour à 25 °C : 25 °C/h

A partir de 120 °C lors de la montée en température, on introduit 0,6625 g (2,5 % du poids du fil) de trifluorométhanesulfonate de triméthylesilyle (Tfo $SiMe_3$) toujours sous courant d'azote sec durant environ 7 heures.

Les pertes en agent réticulant au cours du procédé sont suivies par le dosage en continu des fonctions acides. Elles sont d'environ 2,5 %.

A l'issue de ce traitement, on récupère une bobine de fibre ayant les propriétés suivantes :

- couleur blanche,
- parfaitement dévidable,
- homogène, caractère textile ne présentant pas de collage entre les filaments constitutifs de la fibre,
- infusible (Tr > 300 °C) - Tr = température de ramollissement,
- teneur en oxygène : 4 %,
- $\sigma_r$ = 25 MPa,
- E = 1,2 GPa.

Perte de poids de la bobine de fibre réticulée : -2 %

- EXEMPLE 2 :

On procède exactement comme à l'exemple 1 sauf que :

- l'on part d'une bobine portant 28,3 g de polymère,
- l'on fait subir à la fibre le cycle thermique suivant :

25 à 275 °C : 5 °C/h
palier à 275 °C : 4 heures
retour à 25 °C : 25 °C/h

- l'on introduit 0,522 g (1,85 %) de $(COCl)_2$ à 25 °C au début du cycle thermique pendant 30 minutes,
- l'on introduit 0,934 g (3,3 %) de $TfOSiMe_3$ à 100 °C lors de la montée en température jusqu'à 140 °C, soit pendant une durée de 8 heures.

On obtient après traitement une bobine de fibre infusible blanchâtre, de caractère textile, dévidable ayant une teneur en oxygène de 3,7 %.

- $\sigma r$ = 22 MPa
- E = 1,3 GPa

- EXEMPLE 3 :

On procède exactement comme à l'exemple 1 sauf que :

- l'on part d'une bobine portant 73,2 g de polymere,
- l'on fait subir à la fibre le cycle thermique suivant :

25 à 120 °C : 6 °C/h
120 à 275 °C : 3 °C/h
palier à 275 °C : 4 heures
retour à 25 °C : 25 °C/h

On introduit de la même façon qu'à l'exemple 1, 0,89 g (1,2 %) de $(COCl)_2$ et 1,34 g (1,8 %) de $TfOSiMe_3$.

On obtient une fibre à caractère textile et dévidable dont la teneur en oxygène est de : 3,0 %.

La fibre infusible présente les propriétés mécaniques suivantes :

- diamètre moyen $\phi$ = 21 µm
- $\sigma r$ = 20 MPa
- E = 1,26 GPa
- allongement à la rupture A/R = 2,7 %

On fait subir à la fibre bobinée un troisième traitement qui est le cycle thermique suivant :

montée en température 25 à 250 °C : 20 °C/h
montée en température 250 à 400 °C : 2 °C/h
retour à 25 °C : 25 °C/h

La fibre présente une teneur en oxygène de 3,1 %.

La fibre a les propriétés suivantes :

$\phi$ = 21 µm

$\sigma_r$ = 50 MPa
E = 1,3 GPa
A/R = 8 %

- EXEMPLE 4 - Céramisation :

Les fibres obtenues conformément aux exemples 1 à 3 sont céramisées jusqu'à 1 000 °C dans un courant d'azote. On note le rendement en céramique Rc et la teneur en oxygène (0 %).

Les résultats obtenus sont rassemblés dans le tableau 1 ci-après.

TABLEAU I

| EXEMPLE | Rc | 0 % | $\sigma r$ | E |
|---|---|---|---|---|
| 1 | 78 | 6 % | 1 350 | 140 |
| 2 | 79 | 6,4 % | 1 300 | 130 |
| 3 | 79 | 5,2 % | 1 500 | 185 |

- EXEMPLE 5 :

Dans une étuve munie d'un programmateur de température, balayée par de l'azote sec, on charge sous atmosphère inerte une bobine de 33,2 g de fil polysilazane exempt d'agent de réticulation et préparé selon le mode opératoire de l'exemple 1.

Après 2 purges successives (vide puis azote), on introduit à 25° C, 0,697 g (2,1 % du poids du fil) de $TfoSiMe_3$ véhiculé par le courant d'azote sec et on effectue le cycle thermique suivant :
1. - 25 à 300 °C : 5 °C/h
2. - palier à 300 °C : 4 heures
3. - retour à 25 °C : 25° C/h

A l'issue de ce traitement on récupère une bobine de fibre ayant les propriétés suivantes :
- couleur blanche,
- parfaitement dévidable,
- homogène, caractère textile ne présentant pas de collage entre les filaments,
- infusible (Tr > 300 °C),
- teneur en oxygène : 2,5 %.

La fibre a les propriétés suivantes :
- $\sigma_r$ = 20 MPa,
- E = 1,3 GPa.

- EXEMPLE 6 :

On procède exactement comme à l'exemple 1 sauf que :
- l'on part d'une bobine portant 30 g de polymère
- l'on fait subir à la fibre le cycle thermique suivant :
- 25° C à 120° C : 5° C/heure
- 120° C à 350° C : 3° C/heure
- palier à 350° C : 4 heures
- Retour à 25° C : 25° C/heure
- l'on introduit 0,51 g (1,7 %) de $(COCl)_2$ et 0,72 g (2,4 %) de $TfOSiMe_3$.

On obtient une fibre à caractère textile et dévidable.

Les fibres obtenues sont céramisées jusqu'à 1000° C dans un courant d'azote, puis structurées soit à 1250° C soit à 1350° C sous un courant d'azote, les propriétés des fibres obtenues sont les suivantes :
- 1250° C : $\sigma_r$ = 1920 MPa

E = 180 GPa.
- 1350 °C : $\sigma r$ = 1200 MPa
E = 200 GPa.

Selon les modalités pratiques de la demande de brevet français FR-A-2 631 334 ces fibres sont traitées à l'acide fluorhydrique durant 30 minutes, dans une solution diluée à 4 %.

Les propriétés sont les suivantes :
- 1250 °C : diamètre des filaments : 14,1 µm
$\sigma_r$ = 2250 MPa
E = 182 GPa.
- 1350 °C : diamètre des filaments : 13,3 µm
$\sigma r$ = 1825 MPa
E = 200 GPa.

## Revendications

1. - Procédé de réticulation d'un polysilazane, caractérisé en ce qu'il comporte l'étape (a) de mise en contact, ledit polysilazane avec une quantité efficace d'au moins un trifluorométhanesulfonate de triorganosilyle.
2. - Procédé selon la revendication 1, caractérisé en ce que le trifluorométhanesulfonate de triorganosilyle répond à la formule :

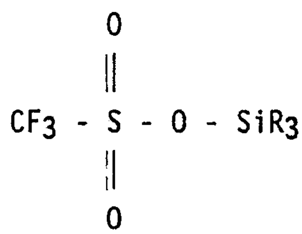
(A)

dans laquelle les radicaux R, identiques ou différents sont choisis parmi :
- les radicaux alkyle linéaires ou ramifiés ayant de 1 à 12 atomes de carbone,
- le radical trifluoro-3,3,3-propyle, le radical phényle et le radical vinyle.
3. - Procédé selon la revendication 1, caractérisé en ce que R est méthyle.
4. Procédé selon l'une quelconque des revendications précédentes, caractérisé en ce que ladite mise en contact se fait à une température comprise entre la température ambiante et la température de ramollissement du polysilazane.
5. - Procédé selon l'une quelconque des revendications précédentes, caractérisé en ce que lors de la mise en contact le trifluorométhanesulfonate de triorganosilyle est sous forme gazeuse.
6. - Procédé selon l'une quelconque des revendications précédentes, caractérisé en ce que, avant la mise en contact, le polysilazane est mis à la forme désirée, telle que notamment fibre ou couche mince.
7. - Procédé selon l'une quelconque des revendications précédentes, caractérisé en ce qu'avant ou après l'étape (a) de mise en contact avec au moins un trifluorométhanesulfonate de triorganosilyle, il comporte en outre l'étape (b) de mise en contact dudit polysilazane avec une quantité efficace d'au moins un composé choisi parmi (i), les composés de formule

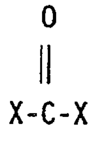
et (ii),

les composés comprenant au moins deux groupements fonctionnels de formule

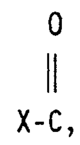

formules dans lesquelles X représente un halogène.

8. - Procédé selon la revendication 7, caractérisé en ce que l'on utilise un dichlorure d'acide dicarboxylique.

9. - Procédé selon l'une quelconque des revendications 7 et 8, caractérisé en ce que l'étape (b) se fait à une température comprise entre la température ambiante et la température de ramollissement du polysilazane.

10. - Procédé selon l'une quelconque des revendications 7 à 9, caractérisé en ce que les composés (i) et (ii) sont sous forme gazeuse.

11. - Procédé selon l'une quelconque des revendications 7 à 10, caractérisé en ce que l'étape (b) est effectuée avant l'étape (a).

12. - Procédé selon l'une quelconque des revendications 1 à 11, caractérisé en ce que le polysilazane réticulé, au moyen de l'étape (a) et éventuellement (b), subit un traitement thermique à une température maximum de 300-400 °C.

13. - Procédé de préparation d'un produit céramique à base de SiC et/ou $Si_3N_4$, caractérisé par le fait qu'il consiste à pyrolyser un polysilazane réticulé selon un procédé conforme à l'une quelconque des revendications 1 à 12.

14. - Fibre obtenue par le procédé de la revendication 13, caractérisée en ce qu'on met en contact cette fibre avec de l'acide fluorhydrique, de préférence en solution aqueuse.

Office européen des brevets

# RAPPORT DE RECHERCHE EUROPEENNE

Numéro de la demande

**EP 90 42 0336**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 208 630 (RHONE-POULENC)<br>* Revendication 1 *<br>- - - | 1 | C 08 G 77/62<br>C 08 J 3/24<br>C 04 B 35/00<br>C 04 B 35/58<br>C 08 K 5/54 |
| D,A | EP-A-0 259 944 (DOW CORNING)<br>* Revendication 1 *<br>- - - - - | 1 | |
| | | | **DOMAINES TECHNIQUES RECHERCHES (Int. Cl.5)** |
| | | | C 08 G<br>C 08 L<br>C 04 B<br>C 08 K<br>C 08 J |

Le présent rapport de recherche a été établi pour toutes les revendications

| Lieu de la recherche | Date d'achèvement de la recherche | Examinateur |
|---|---|---|
| La Haye | 29 novembre 90 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant